# EUROPEAN PATENT SPECIFICATION

(11) **EP 2 055 424 B1**
(45) Date of publication and mention of the grant of the patent: **12.12.2012**
(21) Application number: 08167750.2
(22) Date of filing: 28.10.2008
(51) Int. Cl.: B23K 35/30, C22C 19/05, B23K 35/02, C22F 1/10

(54) **Braze formulations and process for making and using**
Lötformulierungen und Verfahren zu deren Herstellung und Verwendung
Formulation de brasage et son procédé de fabrication

(30) Priority: 30.10.2007 US 928331
(43) Date of publication of application: 06.05.2009
(73) Proprietor: GENERAL ELECTRIC COMPANY, Schenectady, NY 12345 (US)
(72) Inventor: Amancherla, Sundar, 560037 Bangalore (IN); Cretegny, Laurent, Niskayuna, NY 12309 (US)
(74) Representative: Szary, Anne Catherine

(56) References cited:
- EP-A1- 1 859 880
- EP-A2- 1 258 312
- WO-A1-03/025237
- US-A- 5 240 491
- US-A- 5 523 170
- US-A- 6 027 584
- US-A1- 2007 163 684
- US-B1- 6 187 450
- US-B1- 6 520 401

## Description

### FIELD OF THE INVENTION

This invention relates to braze formulations and more particularly, to braze formulations for superalloy articles.

### BACKGROUND OF THE INVENTION

Brazing is a process for joining metal parts to each other, repairing cracks and other surface flaws and damage, building up surfaces to restore desired dimensions and to form protective coatings on metal parts. Typically, a braze formulation is interposed between the parts to be joined or is applied to the part to be repaired and is heated to a temperature above the melting point of the braze formulation to melt the braze formulation, but sufficiently below the solidus temperature of the part being brazed to avoid damaging and/or reducing desired properties of the part being brazed. The molten braze material reacts with the parts to be joined or repaired so that when the brazed part is cooled, a strong joint is formed. Although the base part is not melted, there is diffusion between the base part and the braze material.

A braze formulation typically has a composition and properties similar to the part being brazed, but modified to contain one or more melting point suppressants to form low melting eutectics with the part being brazed. It can be challenging to make the braze joints or repair areas possess the same properties as the base part.

Superalloys are widely used to form high temperature components of gas turbine engines. A difficulty encountered when brazing certain alloys is the tendency for some melting point suppressants to form embrittled phases in the brazed joint or repaired area. Upon solidification, the braze material often forms brittle eutectic phases.

Boron may be used as a melting point suppressant in braze formulations for superalloy substrates. However, boron can cause embrittled phases in the brazed part. Boron has a small atomic radius and diffuses extensively out of the joint or repaired area along grain boundaries into the superalloy base metal forming intermetallic borides and resulting in brittle phases and fractures under loading at elevated temperatures.

U.S. Patent Application Publication No. 2002/0185198 filed December 12, 2002, discloses repair of a single crystal nickel based superalloy article. The method comprises the steps of applying a repair alloy to at least one portion of a component formed from the single crystal nickel based superalloy and heating the component with the repair alloy to a temperature that avoids recrystallization and repair zone incipient melting of the single crystal nickel based superalloy. The repair material preferably comprises a blend of two nickel based alloys-the first being a low melting temperature nickel based brazing alloy and the second being a high melting temperature nickel based alloy.

WO03025237 discloses a brazing composition for repair of superalloys comprising (weight %): nickel; cobalt (4.5-11); chromium (7-12); molybdenum (0.5-1.4); tungsten (1.8-4.5); rhenium (1.0-2.6); aluminum (2.4-5.6); tantalum (2.4-5.9); hafnium (0.4-6.0); carbon (<= 0.1); boron (0.2-2.2); zirconium (0-0.02); iron (0.07-0.2); and manganese (0.03-0.1).

It would be desirable to produce a new braze formulation suitable for brazing superalloys that is compatible with superalloys and provides high strength brazed areas with minimal negative impact to the mechanical properties of the resulting brazed article.

### SUMMARY OF THE INVENTION

In one embodiment, a braze formulation for superalloys consists of from 5 to 30 weight percent chromium, greater than 0 to 20 weight percent cobalt, greater than 0 to 5 weight percent aluminum, greater than 0 to 4 weight percent boron, from 1 to 15 weight percent hafnium, from 0.5 to 20 weight percent tantalum, one or more elements selected from the group consisting of up to 5 weight percent titanium, up to 1 weight percent zirconium, up to 0.1 weight percent carbon, up to 5 weight percent tungsten, up to 10 weight percent iron, up to 8 weight percent niobium, up to 5 weight percent vanadium, up to 7 weight percent rhenium, up to 2 weight percent manganese and up to 1 weight percent silicon, and the balance is nickel, wherein said weight percent is based on the weight of the braze formulation, said braze formulation having a solidus temperature of no greater than 1180°C and a liquidus temperature of no greater than 1250°C.

In another embodiment, a method for brazing a superalloy substrate includes applying a braze formulation to a superalloy substrate, heating the braze formulation at or above the liquidus temperature of the brazing formulation and below the solidus temperature of the superalloy substrate and cooling the braze formulation to solidify and form a brazed product, wherein said braze formulation consists of from 5 to 30 weight percent chromium, greater than 0 to 20 weight percent cobalt, greater than 0 to 5 weight percent aluminum, greater than 0 to 4 weight percent boron, from 1 to 15 weight percent hafnium, from 0.5 to 20 weight percent tantalum, one or more elements selected from the group consisting of up to 5 weight percent titanium, up to 1 weight percent zirconium, up to 0.1 weight percent carbon, up to 5 weight percent tungsten, up to 10 weight percent iron, up to 8 weight percent niobium, up to 5 weight percent vanadium, up to 7 weight percent rhenium, up to 2 weight percent manganese and up to 1 weight percent silicon, and the balance is nickel, wherein said weight percent is based on the weight of the braze formulation, said braze formulation having a solidus temperature of no greater than 1180°C and a liquidus temperature of no greater than 1250°C.

The various embodiments provide an improved and robust brazing formulation having melting point suppression, good compatibility with superalloys. After solidifying, the braze material has a desirable level of strength, ductility and oxidation resistance with minimal embrittled phases or otherwise decreased braze integrity.

### DETAILED DESCRIPTION OF THE INVENTION

The singular forms "a," "an" and "the" include plural referents unless the context clearly dictates otherwise. The endpoints of all ranges reciting the same characteristic are independently combinable and inclusive of the recited endpoint. All references are incorporated herein by reference.

"Optional" or "optionally" means that the subsequently described event or circumstance may or may not occur, or that the subsequently identified material may or may not be present, and that the description includes instances where the event or circumstance occurs or where the material is present, and instances where the event or circumstance does not occur or the material is not present.

In one embodiment, a braze formulation for superalloys comprises nickel, chromium, cobalt, aluminum, boron, hafnium and tantalum, said braze formulation having a solidus temperature of no greater than 1180°C and a liquidus temperature of no greater than 1250°C.

The braze formulation has reduced brittleness from borides or intermetallic compounds that are formed during the brazing process and the brazement has improved mechanical properties, such as ductility.

The braze formulation exhibits a solidus temperature of no greater than 1180°C. In one embodiment, the solidus temperature is from 1120°C to 1180°C. In another embodiment, the solidus temperature is from 1140°C to 1170°C and in another embodiment, the solidus temperature is 1160°C.

The braze formulation exhibits a liquidus temperature of no greater than 1250°C. In one embodiment, the liquidus temperature is from 1190°C to 1250°C. In another embodiment, the liquidus temperature is from 1200°C to 1230°C and in another embodiment, the liquidus temperature is 1205°C.

The braze formulation is compatible with the superalloy substrate and has a similar base composition with a melting point suppressor. In one embodiment, the melting point suppressor comprises hafnium, tantalum and boron. The melting point suppressor lowers the melting point of the braze formulation. In one embodiment, the braze formulation comprises nickel, chromium, hafnium, tantalum and boron, cobalt and aluminum.

In one embodiment, the braze formulation comprises from 5 to 30 weight percent chromium, based on the weight of the braze formulation. In another embodiment, the amount of chromium is from 10 to 30 percent by weight and from 18 to 27 percent by weight, based on the weight of the braze formulation.

The braze formulation may comprise cobalt. In one embodiment, the braze formulation comprises up to 20 weight percent cobalt, based on the weight of the braze formulation. In another embodiment, the amount of cobalt is from 1 to 10 percent by weight and in another embodiment from 1 to 6 percent by weight, based on the weight of the braze formulation.

The braze formulation may comprise aluminum. In one embodiment, the braze formulation comprises up to 5 weight percent aluminum, based on the weight of the braze formulation. In another embodiment, the amount of aluminum is up to 4 percent by weight and in another embodiment up to 3 percent by weight, based on the weight of the braze formulation. In another embodiment, the amount of aluminum is present from 1 to 5 percent by weight based on the weight of the braze formulation.

The braze formulation may comprise boron. In one embodiment, the braze formulation comprises up to 4 weight percent boron, based on the weight of the braze formulation. In another embodiment, the amount of boron is from 0.5 to 2.5 percent by weight and in another embodiment from 0.5 to 1.8 percent by weight, based on the weight of the braze formulation. In an alternative embodiment, the amount of boron is from 0.5 to 1.2 percent by weight, based on the weight of the braze formulation.

In one embodiment, the braze formulation comprises from 1 to 15 weight percent hafnium, based on the weight of the braze formulation. In another embodiment, the amount of hafnium is present from 1 to 10 percent by weight and in another embodiment from 2 to 8 percent by weight, based on the weight of the braze formulation. In another embodiment, the amount of hafnium is present from 3 to 7 percent by weight based on the weight of the braze formulation.

In one embodiment, the braze formulation comprises from 0.5 to 20 weight percent tantalum, based on the weight of the braze formulation. In another embodiment, the amount of tantalum comprises from 1 to 20 percent by weight and in another embodiment from 5 to 20 percent by weight based on the weight of the braze formulation. In an alternative embodiment, the amount of tantalum is present from 10 to 17 percent by weight based on the weight of the braze formulation.

The braze formulation may comprise other elements, such as titanium, zirconium, carbon, tungsten, molybdenum, iron, niobium, vanadium, rhenium, manganese and silicon. The braze formulation may comprise up to 0.1 weight percent carbon, based on the weight of the braze formulation. In another embodiment, the braze formulation may comprise up to 1 weight percent zirconium, based on the weight of the braze formulation. In another embodiment, the braze formulation may comprise up to 5 percent by weight of titanium, based on the weight of the braze formulation. In another embodiment, the braze formulation may comprise up to 5 percent by weight of tungsten, based on the weight of the braze formulation. In another embodiment, the braze formulation may comprise up to 5 percent by weight of molybdenum, based on the weight of the braze formulation. In another embodiment, the braze formulation may comprise up to 10 percent by weight of iron, based on the weight of the braze formulation. In another embodiment, the braze formulation may comprise up to 8 percent by weight of niobium, based on the weight of the braze formulation. In another embodiment, the braze formulation may comprise up to 5 percent by weight of vanadium, based on the weight of the braze formulation. In another embodiment, the braze formulation may comprise up to 7 percent by weight of rhenium, based on the weight of the braze formulation. In another embodiment, the braze formulation may comprise up to 2 percent by weight of manganese, based on the weight of the braze formulation. In another embodiment, the braze formulation may comprise up to 1 percent by weight of silicon, based on the weight of the braze formulation.

A major constituent of the braze formulation is nickel and the balance of the braze formulation is nickel. In one embodiment, the nickel is present from 30 to 75 percent by weight based on the weight of the braze formulation. In another embodiment, nickel is present from 40 to 70 percent by weight and in another embodiment from 45 to 60 percent by weight based on the weight of the braze formulation.

The braze formulation may comprise other additives, such as a fluxing agent. The fluxing agent is an activator that serves as a wetting or cleansing agent that is capable of dissolving residual surface oxides, which can interfere with wetting of the substrate by the braze formulation. The fluxing agent may include a halide compound, such as fluorides, bromides, chlorides or mixtures thereof. In one embodiment, the fluxing agent is present in an amount of from 0.25 to 2 percent by weight based on the weight of the braze formulation.

The superalloy substrate to be joined or repaired may comprise any type of superalloy or combination of superalloys. A superalloy has a base element, which is the single greatest element in the superalloy. Some examples of base elements are nickel, cobalt or iron. In one embodiment, the superalloy substrate to be repaired or joined is a nickel superalloy. In one embodiment, the nickel superalloy comprises nickel, cobalt and chromium. In another embodiment, the nickel superalloy comprises at least 40 percent by weight of nickel. In another embodiment, the nickel superalloy comprises from 6 to 25 weight percent chromium, from 1 to 20 weight percent cobalt and from 2 to 5 weight percent aluminum.

Examples of nickel-based superalloys are designated by the trade names Inconel®, Nimonic®, GTD111® and René® and include equiaxed, directionally solidified and single crystal superalloys.

In another embodiment, a braze formulation for superalloys comprises from 5 to 30 weight percent chromium, up to 20 weight percent cobalt, up to 5 weight percent aluminum, up to 4 weight percent boron, from 1 to 15 weight percent hafnium, from 0.5 to 20 weight percent tantalum and the balance is nickel, wherein said weight percent is based on the weight of the braze formulation.

In another embodiment, a braze formulation comprises from 12 to 20 weight percent chromium, from 1 to 20 weight percent cobalt, from 2 to 3 weight percent aluminum, from 0.5 to 1.5 weight percent boron, from 3 to 5 weight percent hafnium and from 1.5 to 2.5 weight percent tantalum with the balance being nickel.

In another embodiment, a method for preparing a braze formulation for superalloys comprises blending from 5 to 30 weight percent chromium, up to 20 weight percent cobalt, up to 5 weight percent aluminum, up to 4 weight percent boron, from 1 to 15 weight percent hafnium, from 0.5 to 20 weight percent tantalum and the balance is nickel, wherein said weight percent is based on the weight of the braze formulation.

The elements may be blended together in any order. In one embodiment, the elements are in powder form and are dry blended together in any conventional manner. The powders have a small particle size of less than about 100 µm and in some embodiments, are less than about 50 µm. In one embodiment, premixes may be formed by mixing at least two of the elements into a premix and subsequently, blending the premix with the remaining elements. The elements are added to a container and thoroughly mixed until the elements are blended. In one embodiment, the elements are mixed by shaking the container by hand or by an automated shaker.

In another embodiment, the elements are melt blended or are blended together in solution in any conventional manner. In one embodiment, the elements are dispersed in a solvent, such as water or alcohol. The solvent is volatized, such as by heating or by drying.In another embodiment, a method for brazing a superalloy substrate includes applying a braze formulation to a superalloy substrate, heating the braze formulation at or above the liquidus temperature of the brazing formulation and below the solidus temperature of the superalloy substrate and cooling the braze formulation to solidify and form a brazed product, wherein said braze formulation comprises nickel, chromium, cobalt, aluminum, boron, hafnium and tantalum, said braze formulation having a solidus temperature of no greater than 1180°C and a liquidus temperature of no greater than 1250°C.

The braze formulation is applied to the superalloy substrate in any conventional manner. The braze formulation can be in various forms, including molten blend, powder, putty, paste, foil, slurry, a paint version, tape, ribbon and wire. The braze formulation is applied to the surface of the substrate to be repaired by conventional methods. The surface of the substrate to be repaired may be a crack, void or other anomaly. In another embodiment, two or more substrates may be joined together and the braze formulation may be applied to the surface or surfaces to be joined.Powders are commonly made by gas atomization or mechanical pulverization. Powders have a small particle size powder of less than 100 µm and in some embodiments, are less than 50 µm. The powder may be applied to the substrate by dispersing the powder in a solvent, such as water or alcohol, or mixed with a binder to prepare a paste, slurry or suspension, which is applied to the appropriate portion of the substrate by brushing, spraying, dipping or taping.

A paste or putty may be formed by mixing a gel binder with the braze formulation in powder form. The gel binder may be any suitable gel binder known in the art, such as Braz-Binder® gel sold by the Vitta Corporation. In one embodiment, the gel binder is present in an amount up to about 15 percent by volume. In another embodiment, the gel binder is present in an amount from 5 percent by volume to 15 percent by volume. The paste or putty may be deposited with a syringe into the areas to be repaired on the substrate, such as into cracks or crevices, or between two or more substrates to form a joint.

A paint version or slurry may be formed by mixing the braze formulation with one or more solvents and optionally, a binder. The solvent may comprise any suitable solvent known in the art, including but not limited to, water-based solvents, alcohol-based solvents and mixtures thereof. Depending upon the consistency that is required, the solvent may be present in an amount up to 50 percent by volume.

The binders are often water-based materials such as polyethylene oxide and various acrylics; or solvent-based materials. The slurry may contain a variety of other conventional additives, such as dispersants, wetting agents, deflocculants, stabilizers, anti-settling agents, thickening agents, plasticizers, emollients, lubricants, surfactants, anti-foam agents, and curing modifiers. The slurry or paint version can be deposited on the substrate (or between two substrates being joined) by any convenient technique, such as brushing or with a spray gun. The slurry or paint version may be applied in one or more layers. Prior to being heated to a brazing temperature, the slurry is sometimes heat-treated by any suitable means, to remove some or all of its volatile components.

To form a braze material in a tape version, the braze formulation is mixed together with a flexible binder. The flexible binder may be any conventional flexible binder, such as Braz-Tapes® sold by the Vitta Corporation. In one embodiment, the flexible binder is present in an amount up to 15 percent by volume. In another embodiment, the flexible binder is present in an amount from 5 percent by volume to 8 percent by volume. In another embodiment, the tape may be prepared from a tape-cast to produce a free-standing sheet or tape. A slurry is first prepared, as described above, and tape-cast onto a removable support sheet, such as a plastic sheet formed of a material, such as Mylar®. Substantially all of the volatile material in the slurry is then allowed to evaporate. The removable support sheet is then detached from a green braze tape. The resulting tape usually has a thickness in the range of 1 micron to 500 microns.

Tapes are cut to a size appropriate for the particular brazing technique and are set in the location where brazing will take place. The tape is held in place with adhesives, prior to the actual brazing or fusing step. For a joining operation, the tape can be sandwiched between the two components.

Foils, ribbons and wire may be prepared by rapid solidification. In another embodiment, the foils, ribbons and wire may be prepared by combining a braze formulation, in the form of a powder, with a binder. The combined material is then deposited onto a support sheet, such as, by a thermal spray technique, such as HVOF (high velocity oxy-fuel). The support sheet is then removed, leaving a metal foil. Foils can also be prepared by other methods as well, such as, an amorphous metal ribbon technique or a "pre-forming" technique, where a tape is prepared, as explained above, and partially fired (off the part) to form a metallic sheet.

Foils, ribbons and wire are cut to a size appropriate for the particular brazing technique and are set in the location where brazing will take place. Various techniques can be used to temporarily hold the foils, ribbons and wire in place, prior to the actual brazing or fusing step. Examples include the use of adhesives, spot-welds, or tack-welds. For a joining operation, the foils, ribbons and wire can be sandwiched between two or more components.

Brazing is carried out at a temperature sufficient to melt the braze composition, but not the surrounding superalloy substrate. The braze formulation is heated to a temperature at or above the liquidus temperature of the brazing formulation and below the solidus temperature of the superalloy substrate. In one embodiment, the braze formulation is heated to at least 1190°C and below 1290°C.

The braze material is heat treated by any conventional manner. In one embodiment, the braze material may be locally heated or heat treated in a furnace. If a furnace is used, it may be filled with a non-oxidizing atmosphere, such as nitrogen; although a furnace filled with air can also be employed. The substrate can be locally heated using a microwave guide or a laser in a vacuum or inert gas chamber. The alloy that has lower melting point than the substrate material will melt and the liquid-like braze formulation will flow and completely fill the cavity and seal the crack.

The brazed material may then be cooled to solidify the filler metal. When the material cools, it re-solidifies within the cavity. (It should be understood that "cooling" of the braze composition is meant to include passive cooling, or specific cooling steps, e.g., vacuum cooling, blowing with an inert gas, and the like). If a microwave guide or laser is used, rapid solidification can occur resulting in lesser fraction of embrittling phases at the joint.

In another embodiment, the braze formulation may be applied to the superalloy substrate in two or more steps. The metal filler of the braze formulation, which comprises nickel, chromium, cobalt, and aluminum is first applied to the area of the substrate where brazing is desired. The melting point suppressant, which comprises hafnium, tantalum and boron, is applied over the metal filler and the metal filler and melting point suppressant are combined during one or more heating steps. A non-limiting example of such a technique (sometimes referred to as "diffusion bonding" or "liquid phase diffusion bonding" is provided in U.S. Patent 6,520,401 (Miglietti), which is incorporated herein by reference.

In another embodiment, a method for brazing a superalloy substrate includes applying a braze formulation to a superalloy substrate, heating the braze formulation at or above the liquidus temperature of the brazing formulation and below the solidus temperature of the superalloy substrate and cooling the braze formulation to solidify and form a brazed product, wherein said braze formulation comprises from 5 to 30 weight percent chromium, up to 20 weight percent cobalt, up to 5 weight percent aluminum, up to 4 weight percent boron, from 1 to 15 weight percent hafnium, from 0.5 to 20 weight percent tantalum and the balance is nickel, wherein said weight percent is based on the weight of the braze alloy.

In order that those skilled in the art will be better able to practice the present disclosure, the following examples are given by way of illustration and not by way of limitation.

### EXAMPLES

### EXAMPLE 1

Braze alloys were prepared by blending together nickel, cobalt, chromium, aluminum, boron, tantalum and hafnium by arc-melting the elements into a blend having the amounts shown in Table 1. A DSC (differential scanning calorimetry) test was performed on the samples, which is shown in Table 1. The DSC was a Netzsch Instrument STA 449C. The sample was ramped at 10°C per minute from ambient temperature to the maximum temperature (1400°C) and then cooled to ambient temperature.

**Table 1**

| Sample | Ni | Co | Cr | Al | B | Ta | Hf | T solidus | T liquidus |
|---|---|---|---|---|---|---|---|---|---|
| | wt% | wt% | wt% | wt% | wt% | wt% | wt% | °C | °C |
| 1 | 55 | 2 | 25 | 1 | 1 | 13 | 4 | 1150 | 1235 |
| 2 | 49 | 7 | 21 | 1 | 1 | 15 | 6 | 1130 | 1211 |
| 3 | 50 | 4 | 25 | 1 | 1 | 13 | 6 | 1137 | 1224 |

A hammer test was performed on the samples, which is a qualitative test where the alloy is hit with a massive hammer and the alloy is visually assessed to determine the brittleness of the alloy at the location of impact. Multiple blows with a 5-1b hammer to samples 1-3 caused the samples to peen (yield locally), but did not result in cracking or shattering.

## Claims

1. A braze formulation for superalloys consisting from 5 to 30 weight percent chromium, greater than 0 to 20 weight percent cobalt, greater than 0 to 5 weight percent aluminum, greater than 0 to 4 weight percent boron, from 1 to 15 weight percent hafnium, from 0.5 to 20 weight percent tantalum, one or more elements selected from the group consisting of up to 5 weight percent titanium, up to 1 weight percent zirconium, up to 0.1 weight percent carbon, up to 5 weight percent tungsten, up to 10 weight percent iron, up to 8 weight percent niobium, up to 5 weight percent vanadium, up to 7 weight percent rhenium, up to 2 weight percent manganese and up to 1 weight percent silicon, and the balance is nickel, wherein said weight percent is based on the weight of the braze formulation, said braze formulation having a solidus temperature of no greater than 1180°C and a liquidus temperature of no greater than 1250°C.

2. The braze formulation of claim 1 wherein the solidus temperature is from 1120°C to 1180°C and the liquidus temperature is from 1190°C to 1250°C.

3. The braze formulation of claim 1 or claim 2 wherein the solidus temperature is from 1140°C to 1170°C and the liquidus temperature is from 1200°C to 1230°C.

4. The braze formulation of claim 1 wherein the amount of chromium is from 10 to 30 percent by weight, the amount of cobalt is from 1 to 10 percent by weight, the amount of aluminum is from 1 to 5 percent by weight, the amount of boron is from 0.5 to 2.5 percent by weight, the amount of hafnium is from 1 to 10 percent by weight, the amount of tantalum is from 1 to 20 percent by weight and the amount of nickel is from 40 to 70 percent by weight, wherein the percent by weight is based on the weight of the braze formulation.

5. The braze formulation of claim 1 wherein the amount of chromium is from 12 to 20 weight percent, the amount of cobalt is from 1 to 20 weight percent, the amount of aluminum is from 2 to 3 weight percent, the amount of boron is from 0.5 to 1.5 weight percent, the amount of hafnium is from 3 to 5 weight percent and the amount of tantalum is from 1.5 to 2.5 weight percent, wherein the percent by weight is based on the weight of the braze formulation.

6. A method for brazing a superalloy substrate includes applying a braze formulation to a superalloy substrate, heating the braze formulation at or above the liquidus temperature of the brazing formulation and below the solidus temperature of the superalloy substrate and cooling the braze formulation to solidify and form a brazed product, wherein the braze formulation consists of from 5 to 30 weight percent chromium, greater than 0 to 20 weight percent cobalt, greater than 0 to 5 weight percent aluminum, greater than 0 to 4 weight percent boron, from 1 to 15 weight percent hafnium, from 0.5 to 20 weight percent tantalum, one or more elements selected from the group consisting of up to 5 weight percent titanium, up to 1 weight percent zirconium, up to 0.1 weight percent carbon, up to 5 weight percent tungsten, up to 10 weight percent iron, up to 8 weight percent niobium, up to 5 weight percent vanadium, up to 7 weight percent rhenium, up to 2 weight percent manganese and up to 1 weight percent silicon, and the balance is nickel, wherein said weight percent is based on the weight of the braze formulation, said braze formulation having a solidus temperature of no greater than 1180°C and a liquidus temperature of no greater than 1250°C.

7. The method of claim 6 wherein the braze formulation is in a form selected from the group consisting of a molten blend, powder, putty, paste, foil, slurry, a paint version, tape, ribbon and wire.

## Patentansprüche

1. Hartlotformulierung für Superlegierungen, bestehend aus 5 bis 30 Gewichtsprozent (Gew.-%) Chrom, mehr als 0 bis 20 Gew.-% Kobalt, mehr als 0 bis 5 Gew.-% Aluminium, mehr als 0 bis 4 Gew.-% Bor, von 1 bis 15 Gew.-% Hafnium, von 0,5 bis 20 Gew.-% Tantal, einem oder mehreren Elementen, ausgewählt aus der Gruppe bestehend aus bis zu 5 Gew.-% Titan, bis zu 1 Gew.-Zirkonium, bis zu 0,1 Gew.-% Kohlenstoff, bis zu 5 Gew.-% Wolfram, bis zu 10 Gew.-% Eisen, bis zu 8 Gew.-% Niob, bis zu 5 Gew.-% Vanadium, bis zu 7 Gew.-% Rhenium, bis zu 2 Gew.-% Mangan und bis zu 1 Gew.-% Silicium, der Rest ist Nickel, wobei die Gew.-% auf dem Gewicht der Hartlotformulierung beruhen und die Hartlotformulierung eine Solidustemperatur von nicht mehr als 1.180°C und eine Liquidustemperatur von nicht mehr als 1.250°C aufweist.

2. Hartlotformulierung nach Anspruch 1, worin die Solidustemperatur von 1.120°C bis 1.180°C und die Liquidustemperatur von 1.190°C bis 1.250°C beträgt.

3. Hartlotformulierung nach Anspruch 1 oder 2, worin die Solidustemperatur von 1.140 bis 1.170°C und die Liquidustemperatur von 1.200°C bis 1.230°C beträgt.

4. Hartlotformulierung nach Anspruch 1, worin die Menge an Chrom von 10 bis 30 Gew.-%, die Menge an Kobalt von 1 bis 10 Gew.-%, die Menge an Aluminium von 1 bis 5 Gew.-%, die Menge an Bor von 0,5 bis 2,5 Gew.-%, die Menge an Hafnium von 1 bis 10 Gew.-%, die Menge an Tantal von 1 bis 20 Gew.-% und die Menge an Nickel von 40 bis 70 Gew.-% beträgt, wobei die Gew.-% auf dem Gewicht der Hartlotformulierung beruhen.

5. Hartlotformulierung nach Anspruch 1, worin die Menge an Chrom von 12 bis 20 Gew.-%, die Menge an Kobalt von 1 bis 20 Gew.-%, die Menge an Aluminium von 2 bis 3 Gew.-%, die Menge an Bor von 0,5 bis 1,5 Gew.-%, die Menge an Hafnium von 3 bis 5 Gew.-% und die Menge an Tantal von 1,5 bis 2,5 Gew.-% beträgt, wobei die Gew.-% auf dem Gewicht der Hartlotformulierung beruhen.

6. Verfahren zum Hartlöten eines Superlegierungssubstrates, einschließend das Aufbringen einer Hartlotformulierung auf ein Superlegierungssubstrat, das Erhitzen der Hartlotformulierung auf die oder oberhalb der Liquidustemperatur der Hartlotformulierung und unterhalb der Solidustemperatur des Superlegierungssubstrates und das Abkühlen der Hartlotformulierung zum Erstarrenlassen und Bilden eines hartgelöteten Produktes, wobei die Hartlotformulierung aus 5 bis 30 Gew.-% Chrom, mehr als 0 bis 20 Gew.-% Kobalt, mehr als 0 bis 5 Gew.-% Aluminium, mehr als 0 bis 4 Gew.-% Bor, von 1 bis 15 Gew.-% Hafnium, von 0,5 bis 20 Gew.-% Tantal, einem oder mehreren Elementen, ausgewählt aus der Gruppe bestehend aus bis zu 5 Gew.-% Titan, bis zu 1 Gew.-% Zirkonium, bis zu 0,1 Gew.-% Kohlenstoff, bis zu 5 Gew.-% Wolfram, bis zu 10 Gew.-% Eisen, bis zu 8 Gew.-% Niob, bis zu 5 Gew.-% Vanadium, bis zu 7 Gew.-% Rhenium, bis zu 2 Gew.-% Mangan und bis zu 1 Gew.-% Silicium, Rest Nickel besteht, wobei die Gew.-% auf dem Gewicht der Hartlotformulierung beruhen und die Hartlotformulierung eine Solidustemperatur von nicht mehr als 1.180°C und eine Liquidustemperatur von nicht mehr als 1.250°C aufweist.

7. Verfahren nach Anspruch 6, worin die Hartlotformulierung in einer Form vorliegt, ausgewählt aus der Gruppe bestehend aus einer geschmolzenen Mischung, Pulver, Kitt, Paste, Folie, Aufschlämmung, einer Farbversion, Band, Streifen und Draht.

## Revendications

1. Brasure pour superalliages, composée de 5 à 30 pour 100 en poids de chrome, plus de 0 à 20 pour 100 en poids de cobalt, plus de 0 à 5 pour 100 en poids d'aluminium, plus de 0 à 4 pour 100 en poids de bore, de 1 à 15 pour 100 en poids d'hafnium, de 0,5 à 20 pour 100 en poids de tantale, d'un ou de plusieurs éléments choisis dans le groupe constitué d'un maximum de 5 pour 100 en poids de titane, d'un maximum de 1 pour 100 en poids de zirconium, d'un maximum de 0,1 pour 100 en poids de carbone, d'un maximum de 5 pour 100 en poids de tungstène, d'un maximum de 10 pour 100 en poids de fer, d'un maximum de 8 pour 100 en poids de niobium, d'un maximum de 5 pour 100 en poids de vanadium, d'un maximum de 7 pour 100 en poids de rhénium, d'un maximum de 2 pour 100 en poids de manganèse et d'un maximum de 1 pour 100 en poids de silicium, le reste étant du nickel, ledit pourcentage en poids reposant sur le poids de la brasure, ladite brasure ayant une température de solidus non supérieure à 1180°C et une température de liquidus non supérieure à 1250°C.

2. Brasure selon la revendication 1, dans laquelle la température de solidus est de 1120°C à 1180°C et la température de liquidus est de 1190°C à 1250°C.

3. Brasure selon la revendication 1 ou la revendication 2, dans laquelle la température de solidus est de 1140°C à 1170°C et la température de liquidus est de 1200°C à 1230°C.

4. Brasure selon la revendication 1, dans laquelle la proportion de chrome est de 0 à 30 pour 100 en poids, la proportion de cobalt est de 1 à 10 pour 100 en poids, la proportion d'aluminium est de 1 à 5 pour 100 en poids, la proportion de bore est de 0,5 à 2,5 pour 100 en poids, la proportion d'hafnium est de 1 à 10 pour 100 en poids, la proportion de tantale est de 1 à 20 pour 100 en poids et la proportion de nickel est de 40 à 70 pour 100 en poids, le pourcentage en poids reposant sur le poids de la brasure.

5. Brasure selon la revendication 1, dans laquelle la proportion de chrome est de 12 à 20 pour 100 en poids, la proportion de cobalt est de 1 à 20 pour 100 en poids, la proportion d'aluminium est de 2 à 3 pour 100 en poids, la proportion de bore est de 0,5 à 1,5 pour 100 en poids, la proportion d'hafnium est de 3 à 5 pour 100 en poids, la proportion de tantale est de 1,5 à 2,5 pour 100 en poids et la proportion de nickel est de 40 à 70 pour 100 en poids, le pourcentage en poids reposant sur le poids de la brasure.

6. Procédé pour braser un substrat en superalliage, comportant l'application d'une brasure sur un substrat en superalliage, le chauffage de la brasure à une température égale ou supérieure à la température de liquidus de la brasure et inférieure à la température de solidus du substrat en superalliage et le refroidissement de la brasure jusqu'à sa solidification et à la formation un article brasé, la brasure étant composée de 5 à 30 pour 100 en poids de chrome, plus de 0 à 20 pour 100 en poids de cobalt, plus de 0 à 5 pour 100 en poids d'aluminium, plus de 0 à 4 pour 100 en poids de bore, de 1 à 15 pour 100 en poids d'hafnium, de 0,5 à 20 pour 100 en poids de tantale, d'un ou de plusieurs éléments choisis dans le groupe constitué d'un maximum de 5 pour 100 en poids de titane, d'un maximum de 1 pour 100 en poids de zirconium, d'un maximum de 0,1 pour 100 en poids de carbone, d'un maximum de 5 pour 100 en poids de tungstène, d'un maximum de 10 pour 100 en poids de fer, d'un maximum de 8 pour 100 en poids de niobium, d'un maximum de 5 pour 100 en poids de vanadium, d'un maximum de 7 pour 100 en poids de rhénium, d'un maximum de 2 pour 100 en poids de manganèse et d'un maximum de 1 pour 100 en poids de silicium, le reste étant du nickel, ledit pourcentage en poids reposant sur le poids de la brasure, ladite brasure ayant une température de solidus non supérieure à 1180°C et une température de liquidus non supérieure à 1250°C.

7. Procédé selon la revendication 6, dans lequel la brasure se présente sous une forme choisie parmi un mélange fondu, une poudre, un mastic, une pâte, une feuille, une suspension épaisse, une version à appliquer au pinceau, une bande, un ruban et un cordon.
